# EUROPEAN PATENT SPECIFICATION

(11) **EP 3 907 201 B1**
(45) Date of publication and mention of the grant of the patent: **14.08.2024**
(21) Application number: 19906907.1
(22) Date of filing: 23.04.2019
(51) Int. Cl.: C03C 21/00, C03C 3/083, C03C 3/097

(54) **METHOD FOR PRODUCING WINDOW FOR USE AS A COVER GLASS OF AN ELECTRONIC DEVICE**
VERFAHREN ZUR HERSTELLUNG EINES FENSTERS ZUR VERWENDUNG ALS DECKGLAS EINES ELEKTRONISCHEN GERÄTS
PROCÉDÉ DE PRODUCTION D'UNE FENÊTRE SERVANT DE VERRE DE COUVERTURE D'UN DISPOSITIF ÉLECTRONIQUE

(30) Priority: 04.01.2019 KR 20190000995
(43) Date of publication of application: 10.11.2021
(73) Proprietor: Samsung Display Co., Ltd., Gyeonggi-do 17113 (KR)
(72) Inventor: LEE, Hoikwan, Suwon-Si Gyeonggi-do 16662 (KR); KIM, Minki, Hwaseong-Si Gyeonggi-do 18484 (KR); KIM, Byeong-Beom, Asan-Si Chungcheongnam-do 31470 (KR); KIM, Seungho, Asan-Si Gyeonggi-do 31466 (KR); KIM, Yuri, Guri-Si Gyeonggi-do 11921 (KR); YEUM, Jonghoon, Seoul 07445 (KR)
(74) Representative: Dr. Weitzel & Partner
(86) International application number: PCT/KR2019/004926
(87) International publication number: WO 2020/141656

(56) References cited:
- WO-A1-2012/141310
- WO-A1-2017/094727
- WO-A1-2018/143991
- JP-A- 2001 226 137
- JP-A- 2017 528 411
- JP-A- 2017 529 305
- KR-A- 20120 038 079
- US-A1- 2009 277 222
- US-A1- 2013 133 745
- US-A1- 2017 183 255

## Description

### TECHNICAL FIELD

The present invention relates to a method for manufacturing a window, and more particularly, to a method for manufacturing a window used as a cover glass of an electronic device.

### BACKGROUND ART

Electronic devices include windows, housings, and electronic elements. The electronic elements may include various types of elements activated in response to electrical signals, such as display elements, touch elements, or detection elements.

The windows protect the electronic elements and provide active areas to users. Accordingly, the users provide inputs to the electronic elements or receive information generated in the electronic elements through the windows. In addition, the electronic elements may be stably protected from external shocks through the windows.

The document US 2013/133745 discloses a method of chemical strengthening of a glass sheet to improve chemical durability.

In line with the current trend for slimness in electronic devices, the windows are also required to be light and thin, and, in an effort to overcome the resulting structural vulnerability, ways to strengthen the windows to be provided with excellent strength and surface durability are being studied.

### DISCLOSURE OF THE INVENTION

### TECHNICAL PROBLEM

A purpose of the present invention is to provide a method for manufacturing a window used as a cover glass of an electronic device having improved chemical resistance of a window surface while keeping strength characteristics.

In addition, another purpose of the present invention is to provide a method for manufacturing a window used as a cover glass of an electronic device having improved process economic feasibility by skipping a separate post-processing process for enhancing surface characteristics of a strengthened window.

### TECHNICAL SOLUTION

An embodiment provides a method for manufacturing a window used as a cover glass of an electronic device, the method including the steps of providing a base glass; and strengthening the base glass with providing a mixed melt to the base glass and the mixed melt containing a strengthening molten salt and an additive, wherein the strengthening molten salt is a mixed salt containing two or more ions selected from the group consisting of Li⁺, Na⁺, K⁺, Rb⁺ and Cs⁺, or a single salt containing any one ion selected from the group consisting of Li⁺, Na⁺, K⁺, Rb⁺ and Cs⁺, wherein the additive contains at least one among Al₂(SO₄)₃, Al(NO₃)₃, K₂SiO₃, Na₂SiO₃, KCl, Ca(NO₃)₂, and Mg(NO₃)₂, and wherein the additive is contained in an amount of greater than 0 wt% to 10 wt% with respect to a total weight of the mixed melt (ML).

The additive may be Al₂(SO₄)₃ or Al(NO₃)₃.

The base glass may contain SiO₂, Al₂O₃, and Li₂O.

The base glass may further contain P₂O₅.

The base glass may contain SiO₂ in an amount of 50 wt% to 80 wt%, Al₂O₃ in an amount of 10 wt% to 30 wt%, and Li₂O in an amount of 3 wt% to 20 wt%.

The base glass may contain SiO₂, Al₂O₃, and P₂O₅, and may not contain. Li₂O.

The strengthening step may include: a first strengthening step of providing a first strengthening molten salt and the additive to strengthen the base glass; and a second strengthening step of providing a second strengthening molten salt without the additive to strengthen the base glass.

The first strengthening step may be performed at a first temperature, and the second strengthening step may be performed at a second temperature lower than the first temperature.

The first strengthening step may be performed at 380 °C to about 440 °C, and the second strengthening step may be performed at 380 °C to 410 °C.

The first strengthening molten salt may contain KNO₃ and NaNO₃, and the second strengthening molten salt may contain KNO₃ and may not contain NaNO₃.

The method for manufacturing a window used as a cover glass of an electronic device may further include a step of forming a printing layer on at least one of an upper surface and a lower surface of the base glass subjected to the strengthening step.

The strengthening molten salt may contain at least one of KNO₃ and NaNO₃, and the additive may contain Al₂(SO₄)₃ or Al(NO₃)₃.

The mixed melt may contain at least one of Al₂(SO₄)₃ and Al(NO₃)₃, KNO₃, and NaNO₃, and the melt may contain KNO₃.

The method for manufacturing a window used as a cover glass of an electronic device may further include a step of forming a printing layer on at least one of an upper surface and a lower surface of the base glass strengthened after the second strengthening step, and may not include a polishing treatment step of polishing at least one surface of the base glass between the second strengthening step and the printing layer forming step.

### ADVANTAGEOUS EFFECTS

An embodiment may provide a method for manufacturing a window used as a cover glass of an electronic device which provides a window used as a cover glass of an electronic device having excellent surface durability while keeping good compressive stress values by strengthening a base glass using a mixed melt containing a strengthening molten salt and an additive together.

An embodiment may provide a method for manufacturing a window used as a cover glass of an electronic device having excellent printability on a surface thereof by further including an additive in addition to a strengthening molten salt in a strengthening step to minimize defects on the window surface, which are caused in the strengthening step.

### BRIEF DESCRIPTION OF THE DRAWINGS

FIG 1 is a perspective view of an electronic device according to an embodiment;
FIG 2 is an exploded perspective view of the electronic device illustrated in FIG 1;
FIG. 3 is a cross-sectional view showing a window used as a cover glass of an electronic device according to an embodiment;
FIG. 4 is a flowchart of a method for manufacturing a window used as a cover glass of an electronic device according to an embodiment;
FIG 5 is a view schematically showing a strengthening step in a method for manufacturing a window used as a cover glass of an electronic device according to an embodiment;
FIG 6 is a flowchart showing a strengthening step in a method for manufacturing a window used as a cover glass of an electronic device according to an embodiment;
FIG. 7 is a flowchart of a method for manufacturing a window used as a cover glass of an electronic device according to an embodiment;
FIG 8 is a block diagram schematically showing a method for manufacturing a window used as a cover glass of an electronic device according to an embodiment;
FIG. 9 is a cross-sectional view showing a portion of a window used as a cover glass of an electronic device according to an embodiment;
FIG 10 is a flowchart showing a conventional method for manufacturing a window used as a cover glass of an electronic device;
FIG. 11 is a graph evaluating chemical resistance of a window used as a cover glass of an electronic device manufactured by being strengthened using a conventional strengthening step;
FIGS. 12a to 12f each are graphs evaluating chemical resistance of windows manufactured using a method for manufacturing a window used as a cover glass of an electronic device according to an embodiment;
FIG 13 is a perspective view illustrating a window used as a cover glass of an electronic device according to an embodiment; and
FIGS. 14a and 14b are perspective views illustrating windows used as a cover glass of an electronic device according to an embodiment.

### MODE FOR CARRYING OUT THE INVENTION

The present invention may be modified in many alternate forms, and thus specific embodiments will be exemplified in the drawings and described in detail. It should be understood, however, that it is not intended to limit the present invention to the particular forms disclosed, but rather, is intended to cover all modifications, equivalents, and alternatives falling within the scope of the invention.

In the present specification, when an element (or a region, a layer, a portion, etc.) is referred to as being "on," "connected to," or "coupled to" another element, it means that the element may be directly disposed on/connected to/coupled to the other element, or that a third element may be disposed therebetween.

Like reference numerals refer to like elements. Also, in the drawings, the thickness, the ratio, and the dimensions of elements are exaggerated for an effective description of technical contents.

The term "and/or," includes all combinations of one or more of which associated configurations may define.

It will be understood that, although the terms "first", "second", etc. may be used herein to describe various elements, these elements should not be limited by these terms. These terms are only used to distinguish one element from another. For example, a first element could be termed a second element, and, similarly, a second element could be termed a first element, without departing from the scope of example embodiments of the present invention. The terms of a singular form may include plural forms unless the context clearly indicates otherwise.

In addition, terms such as "below," "lower," "above," "upper," and the like are used to describe the relationship of the configurations shown in the drawings. The terms are used as a relative concept and are described with reference to the direction indicated in the drawings.

Unless otherwise defined, all terms (including technical and scientific terms) used herein have the same meaning as commonly understood by one of ordinary skill in the art to which the present invention pertains. It is also to be understood that terms defined in commonly used dictionaries should be interpreted as having meanings consistent with the meanings in the context of the related art, and are expressly defined herein unless they are interpreted in an ideal or overly formal sense.

It should be understood that the terms "comprise", or "have" are intended to specify the presence of stated features, integers, steps, operations, elements, components, or combinations thereof in the disclosure, but do not preclude the presence or addition of one or more other features, integers, steps, operations, elements, components, or combinations thereof.

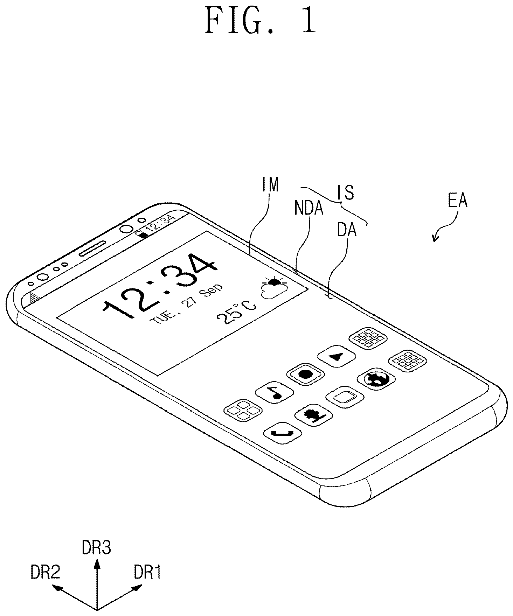

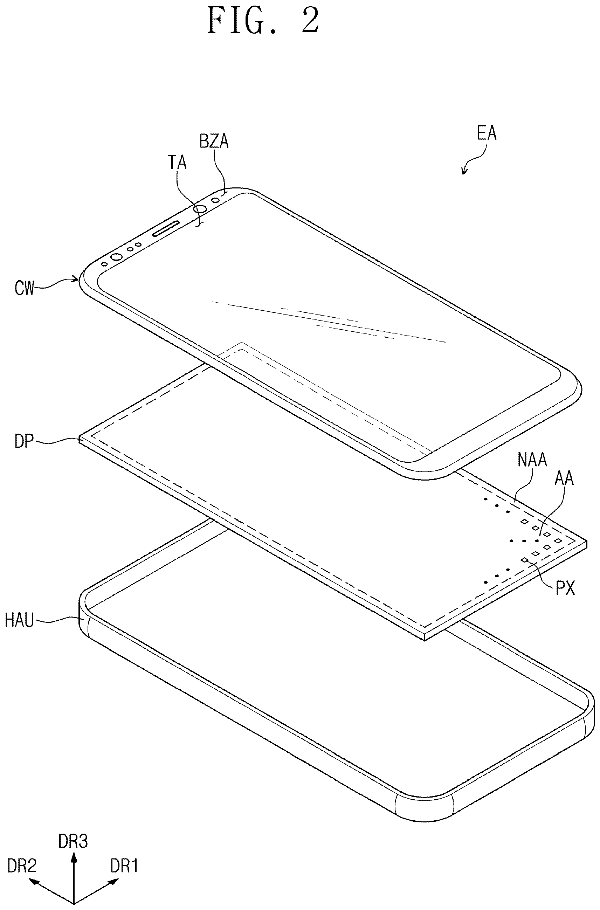

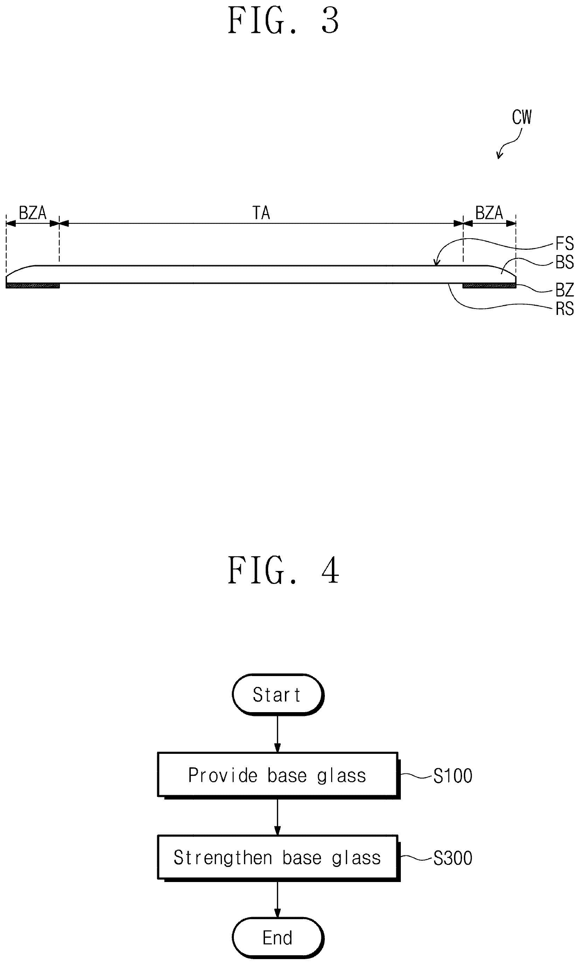

Hereinafter, embodiments of the present invention will be described with reference to the accompanying drawings. FIG. 1 is a perspective view showing an electronic device. FIG 1 is a view showing an embodiment of an electronic device including a window manufactured using a method for manufacturing a window according to an embodiment. FIG 2 is an exploded perspective view of the electronic device illustrated in FIG 1. FIG 3 is a cross-sectional view of a window manufactured using a method for manufacturing a window according to an embodiment.

An electronic device EA may be a device activated in response to electrical signals. The electronic device EA may include various embodiments. For example, the electronic device EA may include a tablet, a laptop, a computer, a smart television, etc. In the present embodiment, the electronic device EA is illustratively presented as a smartphone.

The electronic device EA may display an image IM in a direction of a third directional axis DR3 on a display surface IS parallel to a plane defined by a first directional axis DR1 and a second directional axis DR2. The display surface IS on which the image IM is displayed may correspond to a front surface of the electronic device EA and may correspond to an upper surface FS of a window CW. In addition, the electronic device EA may have a three-dimensional shape with a predetermined thickness in the direction of the third directional axis DR3, which is a direction perpendicular to a plane defined by the first directional axis DR1 and the second directional axis DR2.

Meanwhile, in the electronic device EA of an embodiment illustrated in FIG 1, the display surface IS may include a display area DA and a non-display area NDA adjacent to the display area DA. The non-display area NDA is illustrated to be disposed surrounding the display area DA, but the embodiment is not limited thereto. The display area DA is a portion in which the image IM is provided and may be a portion corresponding to an active area AA of an electronic panel DP. Meanwhile, the image IM may include still images as well as dynamic images. FIG 1 illustrates an internet search window as an example of the image IM.

In the present embodiment, an upper surface (or a front surface) and a lower surface (or a rear surface) of respective members are defined with respect to a direction in which the image IM is displayed. The upper surface and the lower surface may oppose each other with respect to the third directional axis DR3 and a normal direction of each of the upper and lower surfaces may be parallel to the third directional axis DR3. Meanwhile, the directions indicated by the first to third directional axes DR1, DR2, and DR3 are relative concepts, and may thus be changed to other directions. Hereinafter, first to third directions correspond to directions indicated by the first to third directional axes DR1, DR2, and DR3, respectively, and are given the same reference numerals.

The electronic device EA includes a window CW, an electronic panel DP, and a housing HAU. In the electronic device EA according to an embodiment illustrated in FIGS. 1 and 2, the window CW and the housing HAU may combine together to form an exterior of the electronic device EA.

The upper surface FS of the window CW, as described above, defines an upper surface of the electronic device EA. The upper surface FS of the window CW may include a transmission area TA and a bezel area BZA.

The transmission area TA may be an optically transparent area. For example, the transmission area TA may be an area having a visible light transmittance of about 90% or greater.

The bezel area BZA may be an area having a relatively lower light transmittance than the transmission area TA. The bezel area BZA may define a shape of the transmission area TA. The bezel area BZA may be adjacent to the transmission area TA and may surround the transmission area TA.

The bezel area BZA may have a predetermined color. The bezel area BZA may cover a peripheral area NAA of the electronic panel DP to prevent the peripheral area NAA from being viewed from the outside. Meanwhile, this is illustrated as an example, and in the window CW according to an embodiment of the present invention, the bezel area BZA may be omitted.

The window CW may include a glass substrate. For example, the window CW may include a strengthened glass substrate subjected to a strengthening treatment. The window CW may provide the transmission area TA by using the light transmittance of the glass, and may stably protect the electronic panel DP from external shocks by including the strengthened surface.

The window CW may be manufactured using a method for manufacturing a window according to an embodiment. The method for manufacturing a window according to an embodiment includes a strengthening step of strengthening a base glass, and in the strengthening step, a mixed melt containing a strengthening molten salt and an additive different from the strengthening molten salt may be provided to the base glass. A detailed description of the method for manufacturing a window according to an embodiment will be described later.

The electronic panel DP may be a device activated in response to electrical signals. In the present embodiment, the electronic panel DP is activated to display an image IM on a display surface IS of the electronic device EA. The image IM is provided to users through the transmission area TA, and the users may receive information through the image IM. However, this is illustrated as an example, and the electronic panel DP may be activated to detect external inputs applied to the upper surface thereof. The external inputs may include a user's touch, contact or proximity of intangible objects, pressure, light, or heat, and are not limited to any one embodiment.

That is, the electronic panel DP may include an active area AA and a peripheral area NAA. The active area AA may be an area providing the image IM. The transmission area TA may overlap at least a portion of the active area AA.

The peripheral area NAA may be an area covered by the bezel area BZA. The peripheral area NAA is adjacent to the active area AA. The peripheral area NAA may surround the active area AA. A driving circuit or driving wiring for driving the active area AA may be disposed in the peripheral area NAA.

The electronic panel DP may include a plurality of pixels PX. The pixels PX display light in response to electrical signals. The light displayed by the pixels PX makes the image IM. The pixels PX may include a display element. For example, the display element may be an organic light emitting element, a quantum dot light emitting element, a liquid crystal capacitor, an electrophoretic element, or an electrowetting element.

The housing HAU may be disposed below the electronic panel DP. The housing HAU may include a material having relatively high rigidity. For example, the housing HAU may include a plurality of frames and/or plates formed of glass, plastic, or metal. The housing HAU provides a predetermined place for accommodation. The electronic panel DP may be accommodated in the accommodation place and thus protected from external shocks.

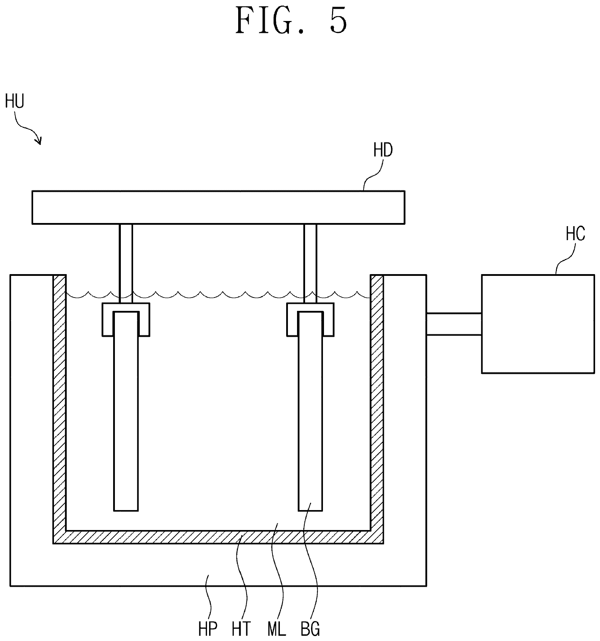

FIG 3 is a cross-sectional view of a window according to an embodiment. Referring to FIG 3, the window CW may include a strengthened glass substrate BS and a printing layer BZ. The strengthened glass substrate BS may be optically transparent. In the present embodiment, the strengthened glass substrate BS may refer to the base glass BG (FIG. 5) after being strengthened. In the present specification, a strengthened glass substrate BS described herein refers to the base glass BG (FIG. 5) strengthened in a strengthening step of the method for manufacturing a window.

An upper surface FS of the strengthened glass substrate BS is exposed to the outside of the electronic device EA, and defines an upper surface FS of the window CW and an upper surface of the electronic device EA. A lower surface RS of the strengthened glass substrate BS faces the upper surface FS in a direction of the third directional axis DR3 .

The printing layer BZ may be disposed on the lower surface RS of the strengthened glass substrate BS to define the bezel area BZA. The printing layer BZ may have a relatively lower light transmittance than the strengthened glass substrate BS. For example, the printing layer BZ may have a predetermined color. Accordingly, the printing layer BZ may selectively transmit/reflect only light of a specific color. Alternatively, for example, the printing layer BZ may be a light blocking layer absorbing incident light. The light transmittance and color of the printing layer BZ may be variously provided according to types and designs of the electronic device EA.

The printing layer BZ may be formed on the lower surface RS of the strengthened glass substrate BS through printing or deposition. In this case, the printing layer BZ may be directly formed on the lower surface RS of the strengthened glass substrate BS. Alternatively, the printing layer BZ may be bonded to the lower surface RS of the strengthened glass substrate BS through a separate adhesive member, etc. In this case, the adhesive member may contact the lower surface RS of the strengthened glass substrate BS.

FIG 4 is a flowchart of a method for manufacturing a window according to an embodiment. The method for manufacturing a window according to an embodiment may include a step S100 of providing a base glass and a step S300 of strengthening the base glass with providing a mixed melt to the base glass.

In the method for manufacturing a window according to an embodiment, the base glass provided in the step S100 of providing a base glass may be manufactured through a float process. In addition, the provided base glass may be manufactured through a down draw process method or a fusion process method. However, the embodiment is not limited thereto, and the provided base glass may be manufactured through various methods which are not illustrated as an example.

The base glass provided in the step S100 of providing a base glass may be cut before the strengthening step S300 for intended use. However, the embodiment is not limited thereto, and the provided base glass may be provided in a size that is not consistent with a size of a finally applied product, and then processed by being cut to a size applied to a final product after the window manufacturing process of an embodiment.

The base glass may be flat. In addition, the base glass may be bent. For example, the base glass cut and provided based on the size of the finally applied product may be bent convex or concave with respect to a central portion. Alternatively, the base glass may include a portion bent in an outer portion. However, the embodiment is not limited thereto, and the base glass may be provided in various shapes.

The base glass provided in the step S100 of providing a base glass may include SiO₂ and Al₂O₃. In addition, in an embodiment, the base glass may contain SiO₂, Al₂O₃, and Li₂O.

For example, the base glass may contain SiO₂ in an amount of 50 wt% to 80 wt%, Al₂O₃ in an amount of 10 wt% to 30 wt%, and Li₂O in an amount of 3 wt% to 20 wt%.

In an embodiment, the base glass may contain SiO₂, Al₂O₃, Li₂O, and P₂O₅. In addition, in an embodiment, the base glass may contain SiO₂, Al₂O₃, and P₂O₅, and may not contain Li₂O. Meanwhile, the base glass may further include at least one among Na₂O, K₂O, MgO, and CaO in addition to SiO₂, Al₂O₃, Li₂O, and P₂O₅.

The strengthening step S300 may be a step of chemically strengthening the base glass with providing a mixed melt to the base glass. That is, the strengthening step S300 may be a step of immersing the base glass in the mixed melt to strengthen a surface of the base glass through an ion exchange method. The mixed melt provided to the base glass may include a strengthening molten salt and an additive. The additive may be different from the strengthening molten salt.

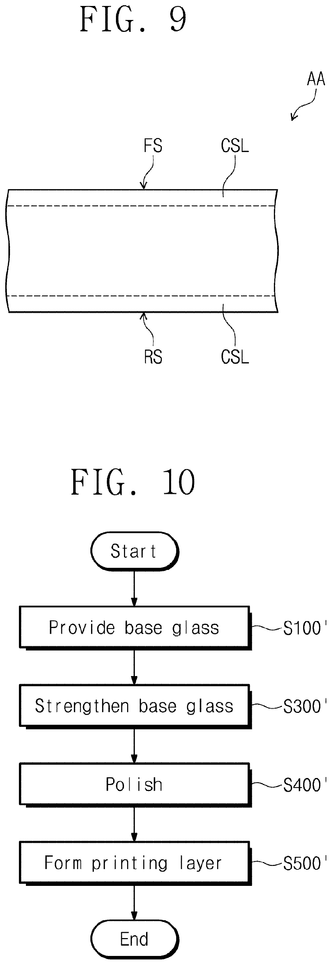

The strengthening step S300 through the ion exchange method may be performed by exchanging alkali metal ions having a relatively smaller ionic radius on the surface of the base glass for alkali metal ions having a larger ionic radius. For example, surface strengthening may be achieved by exchanging ions such as Li⁺ or Na⁺ on the surface of the base glass for ions such as Na⁺ or K⁺ provided from the strengthening molten salt, respectively. The window manufactured through the strengthening step S300 may include a compressive stress layer CSL (FIG. 9) on the surface thereof. The compressive stress layer CSL (FIG. 9) may be formed on at least one of the upper surface FS and the lower surface RS of the window CW.

The strengthening molten salt provided as a mixed melt in the strengthening step S300 may be a mixed salt or a single salt. The mixed salt may be a molten salt containing at least two ions selected from the group consisting of Li⁺, Na⁺, K⁺, Rb⁺ and Cs⁺. In addition, the single salt may be a molten salt containing any one ion selected from the group consisting of Li⁺, Na⁺, K⁺, Rb⁺, and Cs⁺. For example, the strengthening step of the method for manufacturing a window according to an embodiment may include a molten salt of KNO₃ and NaNO₃ as a mixed salt, and a molten salt of KNO₃ as a single salt.

The additive included in the mixed melt may contain at least one among Al₂(SO₄)₃, Al(NO₃)₃, K₂SiO₃, Na₂SiO₃, KCl, Ca(NO₃)₂, and Mg(NO₃)₂. For example, the additive may be at least any one selected from Al₂(SO₄)₃, Al(NO₃)₃, K₂SiO₃, Na₂SiO₃, KCl, Ca(NO₃)₂, and Mg(NO₃)₂. To be specific, in an embodiment, the mixed melt may contain Al₂(SO₄)₃ or Al(NO₃)₃ as an additive.

The additive may be provided together with the strengthening molten salt in the strengthening step S300. The additive is contained in an amount of greater than 0 wt% to 10 wt% with respect to a total weight of the mixed melt containing the additive and the strengthening molten salt. In the strengthening step S300, the surface durability of the window may be improved by including an additive in an amount of greater than 0 wt% in the mixed melt. That is, when the additive is added in the strengthening step, damage to the window surface caused in the surface strengthening step using the strengthening molten salt may be minimized. In addition, when the additive is included in the mixed melt in an amount of greater than 10 wt% in the strengthening step S300, ion exchanges between the ions of the strengthening molten salt and the ions on the surface of the base glass may be reduced, thereby deteriorating strengthening properties.

The strengthening step S300 may be performed by providing the mixed melt to the base glass at high temperature. FIG. 5 schematically shows a strengthening step S300 of providing a mixed melt to strengthen a base glass in the method for manufacturing a window according to an embodiment.

In FIG 5, a strengthening treatment unit HU in which the strengthening step S300 is performed is illustrated as an example. The strengthening treatment unit HU of FIG. 5 is schematically illustrated to describe the strengthening step S300, and the form of the strengthening treatment unit HU is not limited to the one shown in FIG 5.

Referring to FIG 5, the strengthening step S300 may be performed by immersing a base glass BG in a mixed melt ML in the strengthening treatment unit HU. In this case, the mixed melt ML may contain at least one of the strengthening molten salt and the additives described above.

In the illustration of FIG 5, the strengthening treatment unit HU may include a tank HT containing the molten mixed melt ML, a heating part HP disposed surrounding the tank HT and applying heat to the mixed melt ML in the tank HT, a driving part HD fixing the base glass BG and vertically moving the base glass BG to immerse the provided base glass BG in the mixed melt ML, and a control part HC controlling the operation of the strengthening treatment unit HU. The control part HC may control the temperature of the mixed melt ML contained in the tank HT. For example, the control part HC may control the heating part HP to heat the mixed melt ML at a predetermined temperature and keep the temperature of the mixed melt ML at the heated temperature. For example, the heating part HP may serve to provide heat to heat the mixed melt ML, or serve as a heat insulator to keep the temperature of the heated mixed melt ML. The base glass BG may be disposed to be entirely immersed in the mixed melt ML.

Meanwhile, in FIG 5, only two pieces of base glass BG fixed to the driving part HD and processed in the mixed melt ML are illustrated, but this is presented as an example and the embodiment is not limited thereto. The base glass BG processed in the mixed melt ML may be one or a plurality of pieces.

The step S300 of strengthening a base glass may be performed as one strengthening step. In addition, unlike the one above, the strengthening step S300 may be divided into a plurality of steps, and the strengthening step S300 of chemically strengthening a base glass may be performed as a multi-stage strengthening step.

Meanwhile, when the strengthening step S300 is performed as a multi-stage strengthening step, configurations of the strengthening molten salts used in each strengthening step may be different. However, the embodiment is not limited thereto, and the configurations of the strengthening molten salts used in each strengthening step may be the same or may be different in configurations of some molten salts.

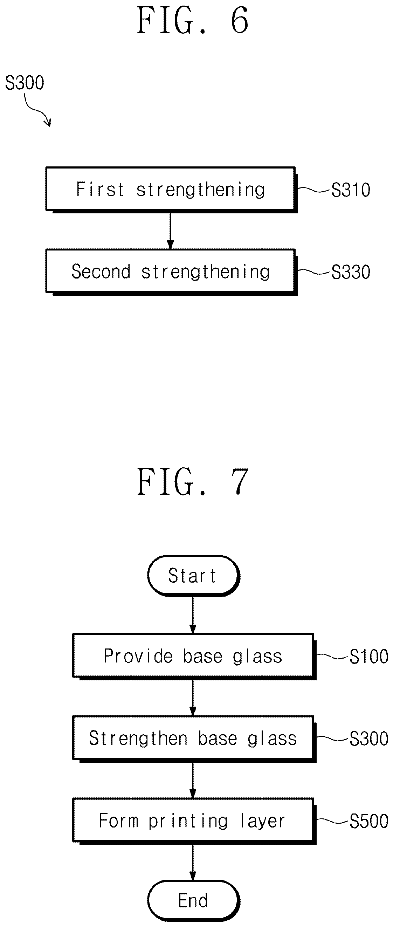

FIG 6 schematically shows a case in which the strengthening step S300 of strengthening a base glass is performed as a multi-stage strengthening step. Referring to FIG 6, the strengthening step S300 may include a first strengthening step S310 and a second strengthening step S320 that are sequentially performed.

When the strengthening step S300 is performed as a multi-stage strengthening step, the first strengthening step S310 may be a step of strengthening the base glass with providing a strengthening molten salt and an additive to the base glass. In addition, the second strengthening step S320 may be a step of strengthening the base glass with providing a strengthening molten salt without an additive to strengthen the base glass.

The first strengthening step S310 may be a step of providing a mixed melt containing a first strengthening molten salt and an additive to the base glass to strengthen the base glass, and for example, the first strengthening molten salt may contain KNO₃ and NaNO₃. The second strengthening step S320 is performed after the first strengthening step S310, and may be a step of providing a melt containing the second strengthening molten salt without an additive to the base glass strengthened in the first strengthening step to further strengthen the base glass. For example, the second strengthening molten salt may contain KNO₃ and may not contain NaNO₃. The first strengthening molten salt and the second strengthening molten salt may be different from each other, or when the first strengthening molten salt and the second strengthening molten salt include a plurality of molten salts, at least some of the molten salts may be the same.

When the strengthening step S300 is performed as a multi-stage strengthening step, the first strengthening step S310 may be performed at a first temperature and the second strengthening step S320 may be performed at a second temperature. That is, the strengthening step S300 may include the first strengthening step S310 of performing an ion exchange treatment at the first temperature and the second strengthening step S320 of performing an ion exchange treatment at the second temperature. The first temperature may be 380 °C to 440 °C, and the second temperature may be 380 °C to 410 °C. For example, the first strengthening step S310 may be performed at the first temperature of 380 °C to 440 °C for 2 to 5 hours, and the second strengthening step S320 may be performed at the second temperature of 380 °C to 410 °C for 30 minutes to 2 hours.

Meanwhile, in the method for manufacturing a window according to an embodiment, the second temperature of the second strengthening step S320 may be equal to or lower than the first temperature of the first strengthening step S310. To be specific, when the base glass provided in the method for manufacturing a window according to an embodiment contains SiO₂, Al₂O₃, and Li₂O₃, the first strengthening step S310 may be performed at 420 °C for 2 hours, and then the second strengthening step S320 may be performed at 390 °C for 45 minutes.

FIG 7 is a flowchart of a method for manufacturing a window according to an embodiment. The method for manufacturing a window according to an embodiment may include a step S100 of providing a base glass and a step S300 of strengthening the base glass, and a step S500 of forming a printing layer on the strengthened base glass.

The printed layer formed in the step S500 of forming a printing layer may be provided on at least one of the upper and lower surfaces of the strengthened base glass. The printing layer may be a printing layer BZ providing the bezel area BZA described in FIG 3. In the step S500 of forming a printing layer, the printing layer BZ may be, for example, provided on the lower surface RS (FIG. 3) of the strengthened glass substrate BS (FIG. 3), which is a strengthened base glass.

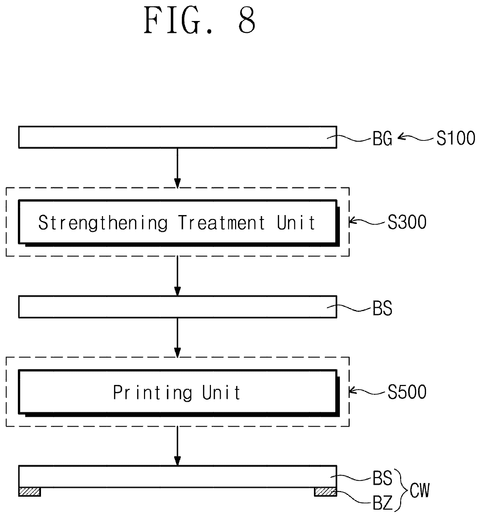

FIG 8 is a block diagram schematically showing a method for manufacturing a window according to an embodiment. In FIG. 8, each unit performing the step S100 of providing a base glass BG, the strengthening step S300 of strengthening the provided base glass BG, and the printing layer forming step S500 of forming a printing layer on the strengthened glass substrate BS, which correspond to each step in the flowchart of FIG. 7 is indicated as a block. The base glass BG is provided to a strengthening treatment unit, and the strengthened glass substrate BS after chemically strengthened in the strengthening treatment unit is transferred to a printing unit. After a printing layer is formed in the printing unit, a window CW including the strengthened glass substrate BS and the printing layer BZ may be provided in the end.

Meanwhile, although not shown in the drawing, between the strengthening step S300 and the printing layer forming step S500, a cooling step of cooling the strengthened glass substrate BS, a cleaning step of cleaning the strengthened glass substrate BS, etc. may be further included, and accordingly, a cooling unit, a cleaning unit, etc. may be further included between the strengthening treatment unit and the printing unit.

FIG 9 is a cross-sectional view showing a portion of a window manufactured using the method for manufacturing a window according to an embodiment. FIG. 9 may be a cross-sectional view showing a portion of the window of FIG. 3. The compressive stress layer CSL may be formed on a surface of a window manufactured using the method for manufacturing a window according to an embodiment. The compressive stress layer CSL may be defined as a layer from the upper surface FS or the lower surface RS of the window to a point at which a compressive stress CS value becomes zero.

Meanwhile, the window manufactured using the method for manufacturing a window according to an embodiment may include the compressive stress layer CSL formed adjacent to the upper surface FS and the lower surface RS, and the surface of the window defining the upper surface FS and the lower surface RS may be provided without damage even after the strengthening step S300.

That is, the method for manufacturing a window according to an embodiment includes an additive together with a strengthening molten salt in the strengthening step to strengthen the base glass, thereby minimizing a decrease in the compressive stress values of the compressive stress layer on the window surface to provide a window having improved surface durability. For example, the window manufactured using the method for manufacturing a window according to an embodiment includes an additive in the strengthening step to strengthen the base glass, thereby minimizing defects on the surface of the manufactured window or voids that may be formed due to vacancies of ions escaping from the inside of the base glass during the strengthening step to exhibit excellent chemical resistance and improved surface strength as well.

In addition, in the method for manufacturing a window according to an embodiment, when the base glass is strengthened by including additives in the strengthening step, defects on the window surface may be minimized, and a uniform window surface may thus be provided even when a separate post-processing process for improving window surface properties is skipped. In addition, accordingly, when a printing layer is formed on the window surface, the printing quality of the printing layer may be well kept.

FIG 10 is a flowchart showing a conventional method for manufacturing a window. The conventional method for manufacturing a window may include a step S100' of providing a base glass, a step S300' of strengthening the base glass, a step S400' of performing a polishing treatment, and a step S500' of forming a printing layer. That is, the conventional method for manufacturing a window is different from the steps of the method for manufacturing a window according to an embodiment in that the conventional method further includes the polishing treatment step S400' after the strengthening step S300'.

Meanwhile, in the conventional method for manufacturing a window, the step S300'of strengthening the base glass may be a step of providing a strengthening molten salt to the base glass to chemically strengthen the base glass. That is, in the step S300'of strengthening the base glass according to the conventional method for manufacturing a window, there is a difference in that when the base glass is chemically strengthened using a strengthening molten salt, the additives suggested in the method for manufacturing a window according to an embodiment are not included.

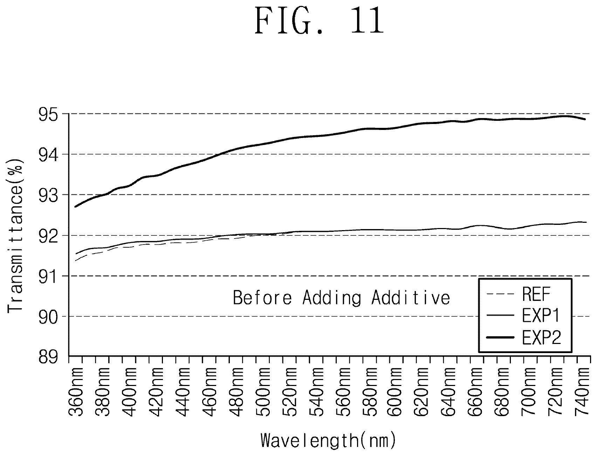

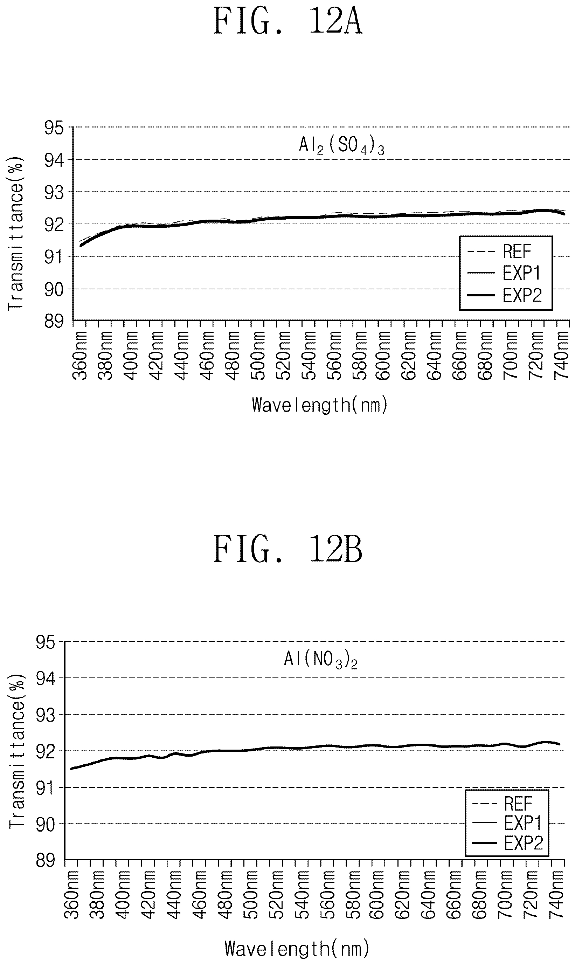

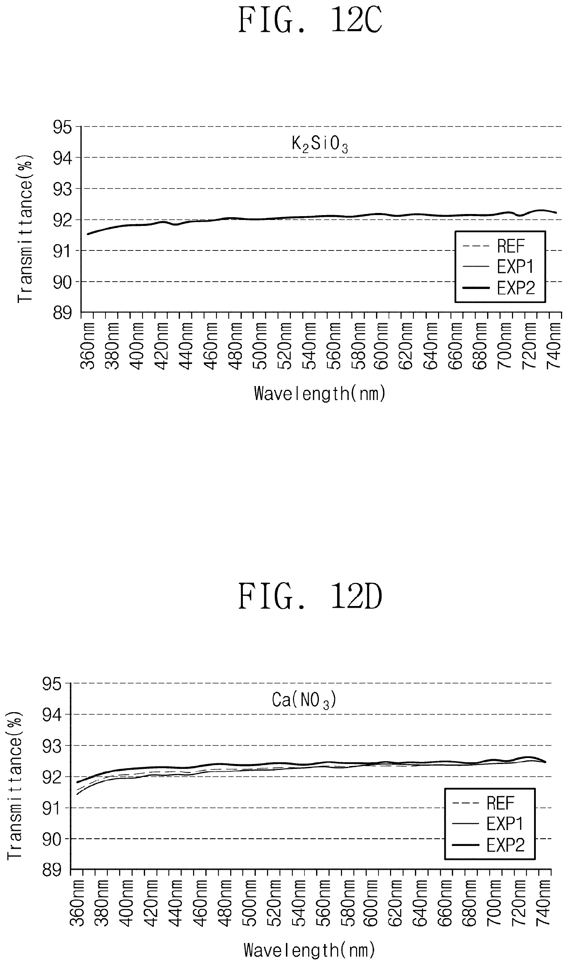

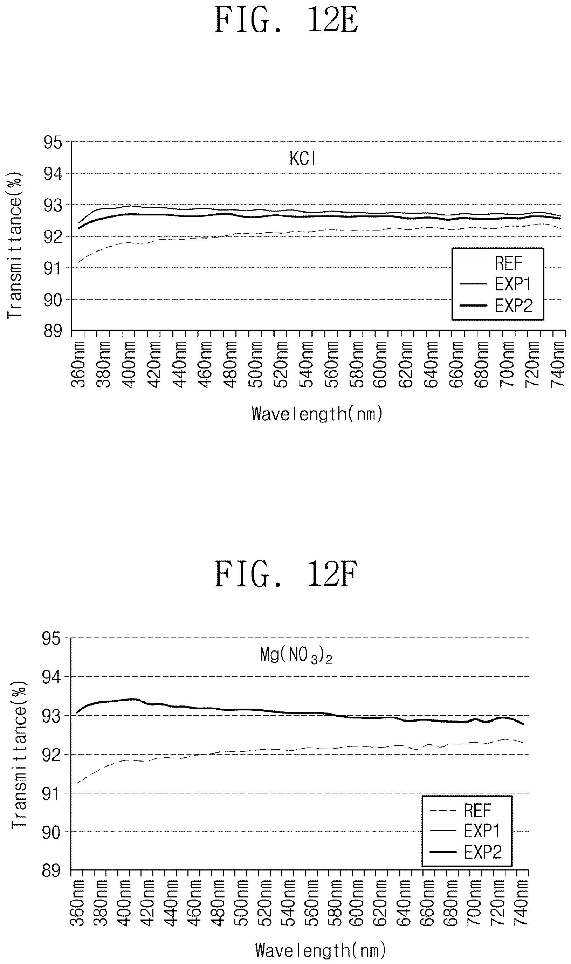

Hereinafter, FIGS. 11 and 12a to 12f are graphs showing results of chemical resistance evaluation for manufactured windows. FIG. 11 shows results of chemical resistance evaluation for a window manufactured using the conventional method for manufacturing a window, and FIGS. 12a to 12f show results of chemical resistance evaluation for Example windows manufactured using the method for manufacturing a window according to an embodiment. FIG. 12a is a case of a strengthening treatment including Al₂(SO₄)₃ as an additive, FIGS. 12b, 12c, 12d, 12e, and 12f show results of chemical resistance evaluation for windows strengthened by including Al(NO₃)₃, K₂SiO₃, Ca(NO₃)₂, KCl, and Mg(NO₃)₂ as an additive, respectively. In the windows manufactured for the results of chemical resistance evaluation shown in FIGS. 12a to 12f, the additives were contained in an amount of 6 wt% in the mixed melt provided to the base glass.

In FIGS. 11 and 12a to 12f, "REF" is a graph showing transmittance values for each wavelength of windows before acid treatment after being manufactured. In addition, In FIGS. 11 and 12a to 12f, "EXP1" indicates transmittance values for each wavelength after acid treatment by immersing the manufactured windows in a nitric acid (HNO₃) solution having a pH of 1 or less at 50 °C for 2 minutes, and "EXP2" indicates transmittance values for each wavelength after acid treatment by immersing the manufactured windows in a nitric acid (HNO₃) solution a pH of 1 or less at 60 °C for 2 minutes. Meanwhile, in some graphs, the transmittance graphs indicated by "REF", "EXP1", and "EXP2" overlap each other, and this suggests that a difference in transmittance is minute or similar to the conditions displayed by the overlapping graphs.

Meanwhile, in the windows manufactured for evaluation shown in FIGS. 11 and 12a to 12f, the strengthening step was performed as a multi-stage strengthening step. The first strengthening step included KNO₃ and NaNO₃₋ as a strengthening molten salt and was performed at 420 °C for 2 hours, and the second strengthening step included KNO₃ as a strengthening molten salt and was performed at 390 °C for 45 minutes. In the window showing the evaluation results in FIG. 11, additives were not included in the strengthening step, and in the windows showing the evaluation results in FIGS. 12a to 12f, additives each were included in the first strengthening step.

Referring to FIG 11, when a window is manufactured using the conventional method for manufacturing a window, it is seen that the window transmittance after the acid treatment increased compared to the window transmittance before the acid treatment. This is believed to be due to an increase in the window transmittance when some chemical components were eluted from the window surface during the chemical resistance evaluation called acid treatment, indicating that the physical properties of the window surface changed after the acid treatment.

Referring to FIGS. 12a to 12f, when a window was manufactured using the method for manufacturing a window according to an embodiment, even after the acid treatment, there was little change in transmittance, or the change in transmittance was smaller than that of the window manufactured using the conventional method for manufacturing a window. This is believed to be due to an increase in chemical durability of the window surface when the strengthening treatment is performed by including an additive together with the strengthening molten salt in the strengthening step.

Meanwhile, in FIGS. 12a to 12c, given that there is little change in transmittance before and after the acid treatment, it is seen that the strengthened window has excellent chemical resistance. That is, it is seen that when the base glass is strengthened by including Al₂(SO₄)₃, Al(NO₃)₃, or K₂SiO₃ as an additive together with the strengthening molten salt during the strengthening step in the method for manufacturing a window according to an embodiment, good surface compressive stress values and excellent surface chemical resistance are shown.

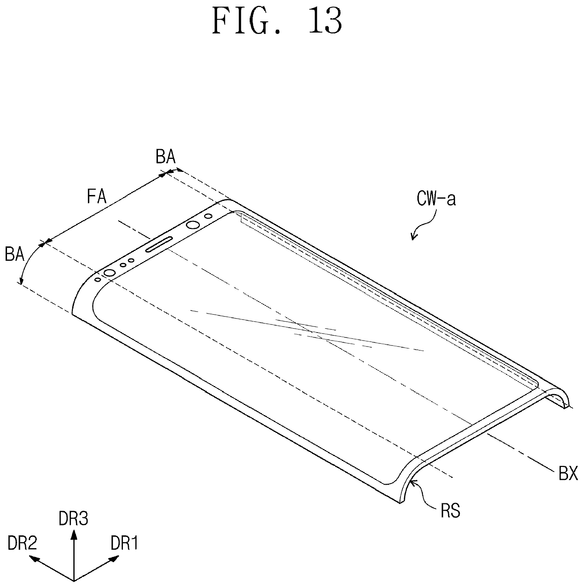

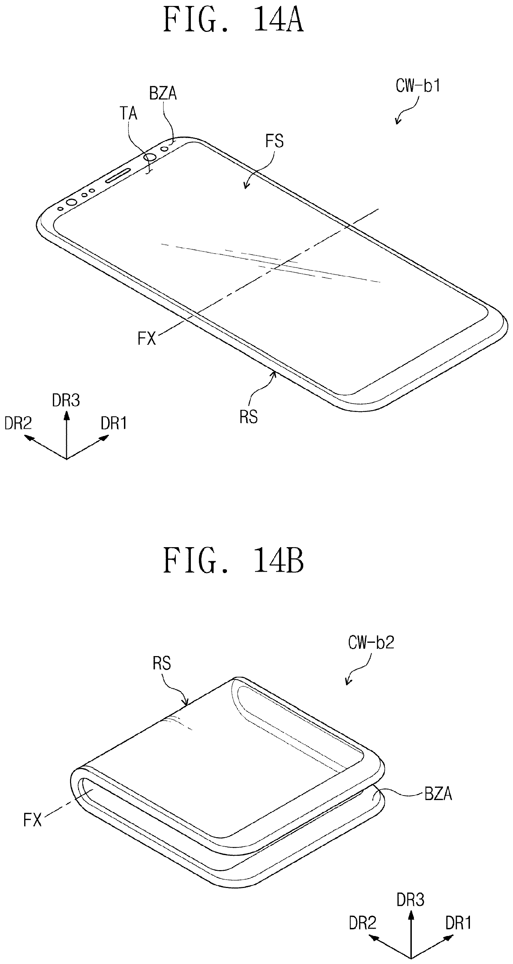

FIG 13 is a perspective view illustrating a window CW-a manufactured using the method for manufacturing a window according to an embodiment of the present invention. FIGS. 14a and 14b are perspective views illustrating windows CW-b1 and CW-b2 manufactured using the method for manufacturing a window according to an embodiment of the present invention. Hereinafter, in the description of the window described with reference to FIGS. 13 and 14a to 14b, differences will be mainly described except for the description overlapping the one described in FIGS. 1 to 10.

As illustrated in FIG 13, the window CW-a may include a bending portion BA bent around a bending axis BX. In an embodiment, the window CW-a may include a flat portion FA and a bending portion BA.

In an embodiment, the bending axis BX may extend along the second directional axis DR2 and may be provided on a rear surface of the window CW-a. The flat portion FA may be a portion parallel to a plane defined by the first and second directional axes DR1 and DR2. The bending portion BA may be a curved portion adjacent to the flat portion FA and having a curved shape. For example, referring to FIG 13, the bending portion BA is a portion adjacent to both sides of the flat portion FA, and may be a portion bent downwards from the flat portion FA. However, the embodiment is not limited thereto, and the bending portion BA may be disposed adjacent to only one side of the flat portion FA, or may be disposed adjacent to all four sides of the flat portion FA on a plane.

The window CW-a according to an embodiment includes a base glass strengthened in a mixed melt containing an additive together with a strengthening molten salt, and has good surface compressive stress values and excellent surface chemical resistance without a separate post-processing step after the strengthening step.

In addition, the windows CW-b1 and CW-b2 manufactured the method for manufacturing a window according to an embodiment may be folded or unfolded around a folding axis FX as illustrated in FIGS. 14a and 14b. For ease of description, the window CW-b1 in an unfolded state is shown in FIG 14a and the window CW-b2 in a folded state is shown in FIG 14b.

The folding axis FX may extend along the first directional axis DR1 and may be defined on an upper surface FS of the window CW-b1. That is, in FIGS. 14a to 14b, an in-folding window in which a lower surface RS of the window CW-b2 is exposed to the outside when being folded is illustrated, but the embodiment is not limited thereto. For example, the window according to an embodiment may be a window in which the folding axis FX is defined below the lower surface RS of the window CW-b1 and is out-folded unlike the one shown in FIGS. 14a and 14b. Meanwhile, the windows CW-b1 and CW-b2 that are modifiable in shape during use may also be manufactured using the method for manufacturing a window according to an embodiment, and go through the strengthening step 5300 by including an additive together with the strengthening molten salt in the strengthening step to have good surface compressive stress values and excellent surface chemical resistance without a separate post-processing step after the strengthening step.

The window CW-a having the bending portion BA manufactured using the method for manufacturing a window according to an embodiment or the windows CW-b1 and CW-b2 that are modifiable in shape may exhibit good surface compressive stress values and excellent durability even without the polishing treatment step after the strengthening step, and may thus be applied to various electronic devices.

The method for manufacturing a window according to an embodiment may provide excellent surface chemical resistance and good surface compressive stress characteristics by strengthening a base glass using a mixed melt containing an additive together with a strengthening molten salt in the strengthening step. In addition, the method for manufacturing a window according to an embodiment provides good surface compressive stress characteristics and excellent surface durability even without the polishing treatment step provided after the strengthening step in order to remove surface defects of the strengthened glass substrate, thereby showing improved processability. In addition, the method for manufacturing a window according to an embodiment provides good surface characteristics by strengthening the base glass using a mixed melt containing an additive together with a strengthening molten salt in the strengthening step, and provides enhanced printing quality provided on the surface of the strengthened base glass and increased durability of a printed layer to the surface of the base glass.

Although the present invention has been described with reference to a preferred embodiment of the present invention, it will be understood that the present invention should not be limited to these preferred embodiments but various changes and modifications can be made by those skilled in the art without departing from the scope of the present invention.

Accordingly, the technical scope of the present invention is not intended to be limited to the contents set forth in the detailed description of the specification, but is intended to be defined by the appended claims.

### INDUSTRIAL APPLICABILITY

The present invention relates to a method for manufacturing a window, which provides a window used as cover glass of an electronic device and having excellent surface durability, and thus has high industrial applicability.

## Claims

1. A method for manufacturing a window used as a cover glass of an electronic device (CW), the method comprising the steps of
a step (S100) of providing a base glass (BG); and
a step (S300) of strengthening the base glass (BG) with providing a mixed melt to the base glass, and the mixed melt (ML) containing a strengthening molten salt and an additive,
wherein the strengthening molten salt is a mixed salt containing two or more ions selected from the group consisting of Li⁺, Na⁺, K⁺, Rb⁺ and Cs⁺, or a single salt containing any one ion selected from the group consisting of Li⁺, Na⁺, K⁺, Rb⁺ and Cs⁺,
wherein the additive contains at least one among Al₂(SO₄)₃, Al(NO₃)₃, K₂SiO₃, Na₂SiO₃, KCl, Ca(NO₃)₂, and Mg(NO₃)₂, and
wherein the additive is contained in an amount of greater than 0 wt% to 10 wt% with respect to a total weight of the mixed melt (ML).

2. The method of claim 1, wherein the additive is Al₂(SO₄)₃ or Al(NO₃)₃.

3. The method of claim 1, wherein the base glass (BG) contains SiO₂, Al₂O₃, and Li₂O.

4. The method of claim 3, wherein the base glass (BG) further contains P₂O₅.

5. The method of claim 3, wherein the base glass (BG) contains:
SiO₂ in an amount of 50 wt% to 80 wt%;
Al₂O₃ in an amount of 10 wt% to 30 wt%; and
Li₂O in an amount of 3 wt% to 20 wt%.

6. The method of claim 1, wherein the base glass (BG) contains SiO₂, Al₂O₃, and P₂O₅, and does not contain Li₂O.

7. The method of claim 1, wherein the step of strengthening (300) comprises:
a first strengthening step of providing a first strengthening molten salt and the additive to strengthen the base glass (BG); and
a second strengthening step of providing a second strengthening molten salt without the additive to strengthen the base glass (BG).

8. The method of claim 7, wherein:
the first strengthening step is performed at a first temperature; and
the second strengthening step is performed at a second temperature lower than the first temperature.

9. The method of claim 7, wherein:
the first strengthening step is performed at 380 °C to 440 °C; and
the second strengthening step is performed at 380 °C to 410 °C.

10. The method of claim 7, wherein:
the first strengthening molten salt contains KNO₃ and NaNO₃; and
the second strengthening molten salt contains KNO₃ and does not contain NaNO₃.

11. The method of claim 1, further comprising a step of forming a printing layer on at least one of an upper surface and a lower surface of the base glass subjected to the step (S300) of strengthening.

12. The method of claim 1, wherein:
the strengthening molten salt contains at least one of KNO₃ and NaNO₃; and
the additive contains Al₂(SO₄)₃ or Al(NO₃)₃.

13. The method of claim 1, wherein:
the mixed melt (ML) contains at least one of Al₂(SO₄)₃ and Al(NO₃)₃, KNO₃, and NaNO₃ ; and
the melt contains KNO₃.

14. The method of claim 1, further comprising a step of forming a printing layer on at least one of an upper surface and a lower surface of the strengthened base glass (BG) after the second strengthening step,
wherein, between the second strengthening step and the step of forming a printing layer, a polishing treatment step (S400) of polishing at least one surface of the base glass (BG) is not included.

## Patentansprüche

1. Verfahren zum Herstellen eines Fensters, das als Abdeckglas einer elektronischen Vorrichtung (CW) verwendet wird, wobei das Verfahren die folgenden Schritte umfasst:
einen Schritt (S100) des Bereitstellens eines Basisglases (BG); und
einen Schritt (S300) des Härtens des Basisglases (BG), wobei eine Mischschmelze dem Basisglas bereitgestellt wird und die Mischschmelze (ML) eine härtende Salzschmelze und ein Additiv enthält,
wobei die härtende Salzschmelze ein Mischsalz, das zwei oder mehr Ionen enthält, die ausgewählt sind aus der Gruppe bestehend aus Li⁺, Na⁺, K⁺, Rb⁺ und
Cs⁺, oder ein einzelnes Salz, das ein beliebiges Ion enthält, das ausgewählt ist aus der Gruppe bestehend aus Li⁺, Na⁺, K⁺, Rb⁺ und Cs⁺, ist,
wobei das Additiv mindestens eines von Al₂(SO₄)₃, Al(NO₃)₂, K₂SiO₃, Na₂SiO₃, KCI, Ca(NO₃)₂ und Mg(NO₃)₂ enthält und
wobei das Additiv in einer Menge von mehr als 0 Gew.-% bis 10 Gew.-% bezogen auf ein Gesamtgewicht der Mischschmelze (ML) enthalten ist.

2. Verfahren nach Anspruch 1, wobei das Additiv Al₂(SO₄)₃ oder Al(NO₃)₃ ist.

3. Verfahren nach Anspruch 1, wobei das Basisglas (BG) SiO₂, Al₂O₃ und Li₂O enthält.

4. Verfahren nach Anspruch 3, wobei das Basisglas (BG) ferner P₂O₅ enthält.

5. Verfahren nach Anspruch 3, wobei das Basisglas (BG) Folgendes enthält:
SiO₂ in einer Menge von 50 Gew.-% bis 80 Gew.-%;
Al₂O₃ in einer Menge von 10 Gew.-% bis 30 Gew.-%; und
Li₂O in einer Menge von 3 Gew.-% bis 20 Gew.-%.

6. Verfahren nach Anspruch 1, wobei das Basisglas (BG) SiO₂, Al₂O₃ und P₂O₅ enthält und kein Li₂O enthält.

7. Verfahren nach Anspruch 1, wobei der Schritt des Härtens (300) Folgendes umfasst:
einen ersten Härtungsschritt des Bereitstellens einer ersten härtenden Salzschmelze und des Additivs zum Härten des Basisglases (BG); und
einen zweiten Härtungsschritt des Bereitstellens einer zweiten härtenden Salzschmelze ohne das Additiv zum Härten des Basisglases (BG).

8. Verfahren nach Anspruch 7, wobei:
der erste Härtungsschritt bei einer ersten Temperatur durchgeführt wird; und
der zweite Härtungsschritt bei einer zweiten Temperatur durchgeführt wird, die niedriger als die erste Temperatur ist.

9. Verfahren nach Anspruch 7, wobei:
der erste Härtungsschritt bei 380 °C bis 440 °C durchgeführt wird; und
der zweite Härtungsschritt bei 380 °C bis 410 °C durchgeführt wird.

10. Verfahren nach Anspruch 7, wobei:
die erste härtende Salzschmelze KNO₃ und NaNO₃ enthält; und
die zweite härtende Salzschmelze KNO₃ enthält und kein NaNO₃ enthält.

11. Verfahren nach Anspruch 1, ferner umfassend einen Schritt des Ausbildens einer Druckschicht auf mindestens einer von einer oberen Fläche und einer unteren Fläche des Basisglases, das dem Schritt (S300) des Härtens unterzogen wird.

12. Verfahren nach Anspruch 1, wobei:
die härtende Salzschmelze mindestens eines von KNO₃ und NaNO₃ enthält; und
das Additiv Al₂(SO₄)₃ oder Al(NO₃)₃ enthält.

13. Verfahren nach Anspruch 1, wobei:
die Mischschmelze (ML) mindestens eines von Al₂(SO₄)₃ und Al(NO₃)₃, KNO₃ und NaNO₃ enthält; und
die Schmelze KNO₃ enthält.

14. Verfahren nach Anspruch 1, ferner umfassend einen Schritt des Ausbildens einer Druckschicht auf mindestens einer von einer oberen Fläche und einer unteren Fläche des gehärteten Basisglases (BG) nach dem zweiten Härtungsschritt, wobei zwischen dem zweiten Härtungsschritt und dem Schritt des Ausbildens einer Druckschicht kein Polierbehandlungsschritt (S400) des Polierens von mindestens einer Oberfläche des Basisglases (BG) beinhaltet ist.

## Revendications

1. Procédé de fabrication d'une fenêtre utilisée comme verre de couverture d'un dispositif électronique (CW), le procédé comprenant les étapes suivantes :
une étape (S100) de fourniture d'un verre de base (BG) ; et
une étape (S300) de renforcement du verre de base (BG) en fournissant une matière fondue mixte au verre de base, et la matière fondue mixte (ML) contenant un sel fondu de renforcement et un additif,
dans lequel le sel fondu de renforcement est un sel mixte contenant deux ions ou plus choisis dans le groupe consistant en Li⁺, Na⁺, K⁺, Rb⁺ et Cs⁺, ou un sel unique contenant un ion quelconque choisi dans le groupe consistant en Li⁺, Na⁺, K⁺, Rb⁺ et Cs⁺,
dans lequel l'additif contient au moins un parmi Al₂(SO₄)₃, Al(NO₃)₃, K₂SiO₃, Na₂SiO₃, KCI, Ca(NO₃)₂ et Mg(NO₃)₂, et
dans lequel l'additif est contenu dans une quantité de plus de 0 % en poids à 10 % en poids par rapport au poids total de la matière fondue mixte (ML).

2. Procédé selon la revendication 1, dans lequel l'additif est Al₂(SO₄)₃ ou Al(NO₃)₃.

3. Procédé selon la revendication 1, dans lequel le verre de base (BG) contient du SiO₂, de l'Al₂O₃ et du Li₂O.

4. Procédé selon la revendication 3, dans lequel le verre de base (BG) contient en outre du P₂O₅.

5. Procédé selon la revendication 3, dans lequel le verre de base (BG) contient :
du SiO₂ dans une quantité de 50 % en poids à 80 % en poids ;
de l'Al₂O₃ dans une quantité de 10 % en poids à 30 % en poids ; et
du Li₂O dans une quantité de 3 % en poids à 20 % en poids.

6. Procédé selon la revendication 1, dans lequel le verre de base (BG) contient du SiO₂, de I'Al₂O₃, et du P₂O₅, et ne contient pas de Li₂O.

7. Procédé selon la revendication 1, dans lequel l'étape de renforcement (300) comprend :
une première étape de renforcement consistant à fournir un premier sel fondu de renforcement et l'additif pour renforcer le verre de base (BG) ; et
une seconde étape de renforcement consistant à fournir un second sel fondu de renforcement sans l'additif pour renforcer le verre de base (BG).

8. Procédé selon la revendication 7, dans lequel :
la première étape de renforcement est effectuée à une première température ; et
la seconde étape de renforcement est effectuée à une seconde température inférieure à la première température.

9. Procédé selon la revendication 7, dans lequel :
la première étape de renforcement est effectuée à 380 °C jusqu'à 440 °C ; et
la seconde étape de renforcement est effectuée à 380 °C jusqu'à 410 °C.

10. Procédé selon la revendication 7, dans lequel :
le premier sel fondu de renforcement contient du KNO₃ et du NaNO₃ ; et
le second sel fondu de renforcement contient du KNO₃ et ne contient pas de NaNO₃.

11. Procédé selon la revendication 1, comprenant en outre une étape de formation d'une couche d'impression sur au moins une parmi une surface supérieure et une surface inférieure du verre de base soumis à l'étape (S300) de renforcement.

12. Procédé selon la revendication 1, dans lequel :
le sel fondu de renforcement contient au moins un parmi : KNO₃ et NaNO₃ ; et
l'additif contient de l'Al₂(SO₄)₃ ou de l'Al(NO₃)₃.

13. Procédé selon la revendication 1, dans lequel :
la matière fondue mixte (ML) contient au moins un parmi : Al₂(SO₄)₃ et Al(NO₃)₃, KNO₃ et NaNO₃ ; et
la matière fondue contient du KNO₃.

14. Procédé selon la revendication 1, comprenant en outre une étape de formation d'une couche d'impression sur au moins une parmi une surface supérieure et une surface inférieure du verre de base (BG) renforcé après la seconde étape de renforcement,
dans lequel, entre la seconde étape de renforcement et l'étape de formation d'une couche d'impression, une étape de traitement par polissage (S400) consistant à polir au moins une surface du verre de base (BG) n'est pas incluse.
